# EUROPÄISCHE PATENTSCHRIFT

(11) **EP 0 459 085 B1**
(45) Veröffentlichungstag und Bekanntmachung des Hinweises auf die Patenterteilung: **26.05.1993**
(21) Anmeldenummer: 91102388.5
(22) Anmeldetag: 20.02.1991
(51) Int. Cl.: F16L 59/06, F16L 59/00, E04B 1/68

(54) **Fügeverfahren für Vakuum-Wärmeisolationselemente**
Joining method for vacuum-thermal insulation elements
Méthode d'assemblage pour vacuum-éléments d'isolation thermique

(30) Priorität: 18.05.1990 DE 4016048
(43) Veröffentlichungstag der Anmeldung: 04.12.1991
(73) Patentinhaber: Deutsche Aerospace AG, 81663 München (DE)
(72) Erfinder: Schilf, Lothar, Dipl.-Ing., W-2816 Kirchlinteln (DE)

(56) Entgegenhaltungen:
- DE-A- 3 307 457
- DE-A- 3 634 347
- US-A- 4 332 401
- US-A- 4 515 397

## Beschreibung

Die Erfindung betrifft ein Fügeverfahren für rohr-, ring- und haubenförmige Vakuum-Wärmeisolationselemente, gemäß dem Oberbegriff des Patentanspruches 1.

Vakuum-Wärmeisolationselemente sind flächige, in der Regel aus Metall hergestellte Hohlkörper mit - über die Fläche - etwa konstantem Abstand zwischen den beiden quer zum Wärmestrom anzuordnenden Wänden, d.h., zwischen der im Betrieb kälteren und der im Betrieb wärmeren Wand. Der Hohlraum ist mit einem druckfesten, schlecht wärmeleitenden Pulver, z.B. Kieselgur, gefüllt und auf einen niedrigen Druckwert, z.B. 10⁻³ mbar, evakuiert. Die Pulverfüllung nimmt als Abstandshalter die Druckbelastung durch den Atmosphärendruck bzw. durch den jeweiligen Betriebsdruck (Druckrohre, -behälter etc.) auf und reduziert die Wärmeübertragung durch Strahlung. Im Randbereich sind die beiden flächigen Wände solcher Elemente über dünnwandige, meist mäanderförmig gewellte Membranen aus Material mit relativ geringer Wärmeleitfähigkeit (z.B. rostfreier Stahl) verbunden, um dort den Wärmeübergang durch Leitung zu reduzieren. Für bestimmte Anwendungsfälle, wie Rohrleitungen und Behälter, ist es sinnvoll, die Wärmeisolationselemente in Form von ein- oder zweidimensional gekrümmten Schalen mit axial ausgerichteten, umlaufenden Kanten zu fertigen. So läßt sich beispielsweise ein Behälter durch axiales Aneinanderreihen und Verbinden eines haubenförmigen, mindestens eines ringförmigen und eines weiteren haubenförmigen Wärmeisolationselementes herstellen. Aufgrund der konstruktionsbedingt zerklüfteten Stirnflächen (Membranabdichtung zwischen Außen- und Innenwand) der Vakuum-Wärmeisolationselemente entstehen beim Verbinden der Elemente umlaufende Spalte bzw. Hohlräume (Stoßfugen), welche in bezug auf Wärmeverluste besonders kritisch sind. Die einfachste - und ungünstigste - Ausführung besteht darin, nur die Außen- oder Innenwände der Vakuum-Wärmeisolationselemente dicht miteinander zu verbinden und die Stoßfugen zum eingeschlossenen Medium oder zur Umgebung (i.a. Luft) hin einseitig offen zu lassen. Somit ist im Fugenbereich nur eine geringfügige Isolationswirkung gegeben, so daß mit relativ hohen Wärmeverlusten zu rechnen ist.

Eine gewisse Verbesserung ist zu erreichen, indem die Stoßfugen nachträglich mit Isolationsmaterial (z.B. Mineralwolle, Schaumstoff) ausgefüllt werden. Problematisch hierbei sind die Temperaturbeständigkeit und die Alterungsbeständigkeit solcher Materialien sowie die Aufnahme von Feuchtigkeit bzw. Flüssigkeit. Die Isolationswirkung der Stoßfugen ist auch hier deutlich schlechter als diejenige der Wärmeisolationselemente selbst.

Aus der DE-OS 36 34 347 ist eine Fugenisolation für Vakuum-Wärmeisolationselemente bekannt, welche einseitig flächig an einer gasdichten, druckfesten Wand anliegen. Bei dieser Isolation werden die fugen auf der der druckfesten Wand agegenüberliegenden Seite mit elastisch verformbaren Dehnungsblechen gasdicht abgedeckt, mit druckfestem Isoliermaterial ausgefüllt und evakuiert. Auf diese Weise ist die Isolationswirkung der Stoßfugen zumindest annähernd so gut wie diejenige der Wärmeisolationselemente selbst. Die beschriebene Fugenisolation ist für großflächige Behälter, z.B. Container, oder große Rohrleitungen gedacht, welche mit einer Vielzahl von plattenförmigen, z.B. rechteckigen, Vakuum-Wärmeisolationselementen belegt werden, deren Stoßfugen sich kreuzen bzw. ineinander übergehen. Da die Dehnungsbleche - zumindest in Teilbereichen - nachträglich auf die Stoßfugen aufzubringen sind, z.B. durch Schweißen, ist eine gute Zugänglichkeit der Fugen am oder im Bauteil erforderlich.

Es leuchtet ein, daß diese Art der Fugenisolation insbesondere bei Innenisolierungen in kleineren Behältern zu fertigungstechnischen Problemen führt und letztlich nicht mehr sinnvoll ist.

Demgegenüber besteht die Aufgabe der Erfindung darin, ein Fügeverfahren für rohr-, ring- und haubenförmige Vakuum-Wärmeisolationselemente mit axial ausgerichteten, umlaufenden Kanten bereitzustellen, welches sowohl im Kryo- als auch im Hochtemperaturbereich einsetzbar ist, welches die Energieverluste im Stoßfugenbereich erheblich reduziert, welches einfach durchzuführen und deshalb sowohl unter Industriebedingungen als auch in der Feldmontage einsetzbar ist, und welches u.a. auch für Rohre und Behälter mit kleinerem Querschnitt und mit Innenisolierung verwendbar ist.

Diese Aufgabe wird durch die im Anspruch 1 gekennzeichneten Merkmale a) bis f) gelöst.

Erfindungsgemäß werden entweder nur die Außenwände oder nur die Innenwände der Vakuum-Wärmeisolationselemente im Kantenbereich direkt miteinander verbunden, die Verbindung der jeweils anderen Wände erfolgt über axial nachgiebige, umlaufende Bälge. Alle Verbindungen sind vakuumdicht, so daß die allseitig eingeschlossenen Stoßfugen abschließend evakuiert werden können. Vor dem Fügen stehen die freien Kanten der auf die Wärmeisolationselemente aufgeteilten und vakuumdicht mit diesen verbundenen Bälge axial vor. Dadurch ist es möglich, zuerst die Bälge und anschließend - nach vollständigem Aneinanderrücken der Wärmeisolationselementedie Vakuum-Wärmeisolationselemente selbst zu verbinden. Beide Fügevorgänge, z.B. in Form von Schweißen, können von derselben Seite aus, z.B. radial von außen, erfolgen, was das Verfahren stark vereinfacht und die Herstellung von Rohrleitungen und Behältern mit kleinem Querschnitt und Innenisolierung, d.h. innenliegenden Bälgen, praktisch erst möglich macht. Da die umlaufenden Bälge in radialer Richtung eine ausreichende Steifigkeit besitzen, um die mechanischen Belastungen infolge der Druckunterschiede (Evakuierung, Betriebsdrücke) aufzunehmen, kann auf eine Füllung der Stoßfugen mit druckfestem Isolationsmaterial verzichtet werden, was das Verfahren zusätzlich vereinfacht.

Die Unteransprüche 2 bis 5 kennzeichnen bevorzugte Ausgestaltungen des Fügeverfahrens nach Anspruch 1.

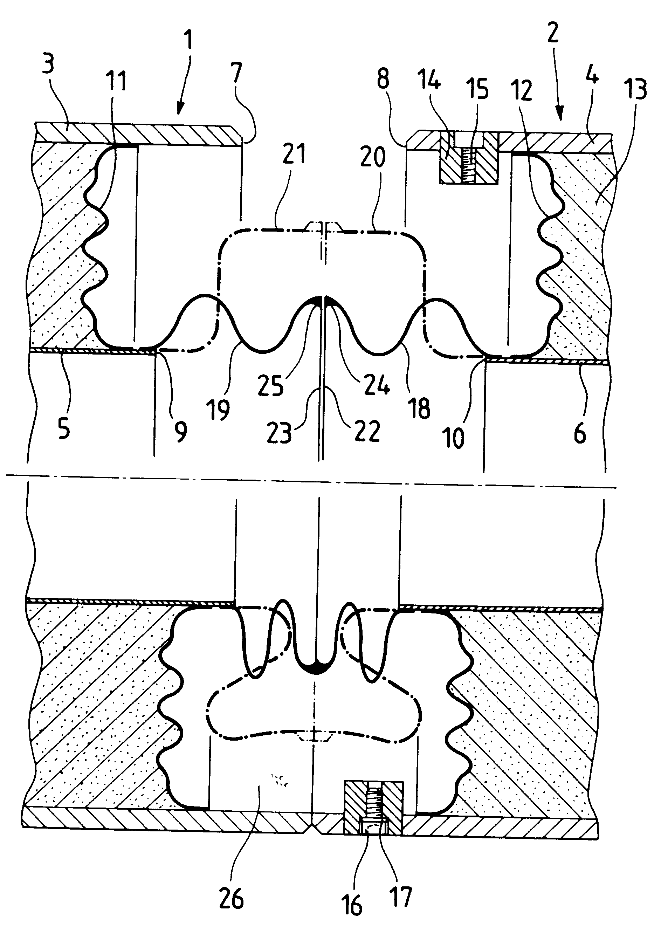

Die Erfindung wird nachfolgend anhand der Zeichnung noch näher erläutert. Dabei zeigt die Figur in vereinfachter Darstellung:

Oberhalb der Achse einen Teillängsschnitt durch zwei rohrförmige Vakuum-Wärmeisolationselemente in der zum Verbinden der Bälge vorgesehenen Position, unterhalb der Achse einen vergleichbaren Teillängsschnitt in der zum Verbinden der Außenwände vorgesehenen Position.

In der Figur ist der Fugenbereich zweier rohrförmiger Vakuum-Wärmeisolationselemente 1 und 2 mit Innenisolierung dargestellt. Innenisolierung bedeutet, daß die relativ dicken, mechanisch belastbaren Außenwände 3 und 4 der Vakuum-Wärmeisolationselemente 1 und 2 die kräfteaufnehmende Struktur der herzustellenden Rohrleitung bilden, wohingegen die relativ dünnen Innenwände 5 und 6 primär eine dichtende sowie eine strömungsmechanische Funktion ausüben und Kräfte, resultierend z.B. aus dem Druck des eingeschlossenen Mediums, über das druckfeste Isolationsmaterial an die Außenwände 3 und 4 weiterleiten. Umgekehrt bedeutet Außenisolierung, daß die tragende Wandstruktur innerhalb der Isolierung liegt, d.h., von dieser umhüllt wird. Das erfindungsgemäße Fügeverfahren ist auch für Außenisolierungen verwendbar; dies setzt jedoch voraus, daß die Innenquerschnitte der zu verbindenden Wärmeisolationselemente groß genug sind, um einen Fügevorgang, z.B. Schweißen, von innen zu ermöglichen.

Die dargestellten Vakuum-Wärmeisolationselemente besitzen Außen- und Innenwände 3 und 4 bzw. 5 und 6 mit kreisrundem Querschnitt.

In der Praxis weit weniger relevant aber dennoch vorstellbar und erfindungsgemäß möglich ist die Verbindung von Elementen mit anderen Querschnittsformen wie z.B. Ovalen, Ellipsen, gerundeten Polygonen usw..

In der in der Figur oberhalb der Achse dargestellten Position sind die Vakuum-Wärmeisolationselemente 1 und 2 koaxial ausgerichtet, die axial vorstehenden Kanten 7 und 8 der Außenwände 3 und 4 weisen noch einen deutlichen Abstand zueinander auf. Gut zu erkennen sind die mäanderförmigen Membranen 11 und 12, welche jeweils den evakuierten Raum mit dem druckfesten Isolationsmaterial, hier einer Kieselgurfüllung 13, stirnseitig begrenzen. Im Bereich der axial zurückversetzten Kanten 9 und 10 sind zwei Bälge 18 und 19 vakuumdicht mit den Innenwänden 5 und 6 verbunden, z.B. durch Schweißen, Löten oder Kleben. Die umlaufenden Bälge 18 und 19 weisen die typische Faltenbalgwellung mit periodisch wechselndem Durchmesser auf.

Alternativ hierzu sind strichpunktiert noch zwei anders geformte, nach Art einer Rollstrumpfdichtung gestaltete Bälge 20 und 21 dargestellt, welche sich bezüglich ihrer Aufgabe jedoch nicht von den Bälgen 18 und 19 unterscheiden. Diese Aufgabe besteht i.w. in einer vakuumdichten, axial nachgiebigen Verbindung der Innenwände 5 und 6.

Die axial vorzugsweise einen bis mehrere Zentimeter über die Kanten 7 und 8 der Außenwände 3 und 4 vorstehenden Kanten 22 und 23 der Bälge 18 und 19 liegen - ebenso wie diejenigen der Bälge 20 und 21 - bündig und fluchtend aneinander, wobei - wie dargestellt - ein kleiner axialer Spalt vorhanden sein kann. Im Hinblick auf das bevorzugte Verbindungsverfahren Schweißen sind die Bälge 18 und 19 - ebenso wie die Bälge 20 und 21 - im Bereich ihrer Kanten 22 und 23 verdickt, was nicht zwingend erforderlich ist. Das Verschweißen der Bälge kann in einfacher Weise von außen durch den in der Regel mehrere Zentimeter messenden Spalt zwischen den Kanten 7 und 8 erfolgen. Falls die Bälge durch Löten verbunden werden sollen, sind andere Gestaltungen ihres Kantenbereiches günstiger. Beispielsweise können die Balgkanten ineinandersteckbar ausgeführt sein, d.h., sich mit geringem radialem Spiel axial überlappen. Sie können aber auch z.B. durch Bördeln radial vergrößerte Stirnflächen aufweisen, welche paarweise die Lotfuge bilden.

Nach dem Verbinden der Bälge werden die Vakuum-Wärmeisolationselemente 1 und 2 axial gegeneinander bewegt, bis ihre Kanten 7 und 8 bündig und fluchtend aneinanderliegen. Dieser Zustand ist unterhalb der Achse dargestellt. Beim Aneinanderrücken werden die Bälge 18 und 19 bzw. 20 und 21 elastisch und ggf. auch plastisch verformt, wobei insbesondere die Verbindungsstellen nicht überlastet werden dürfen.

Die nach außen angeschrägten Kanten 7 und 8 können nunmehr z.B. mit einer kehlförmigen Schweißnaht von außen vakuumdicht miteinander verbunden werden (Schweißnaht nicht dargestellt).

Auch hier kann eine Lötverbindung zur Anwendung kommen, wobei die Außenwände im Kantenbereich beispielsweise ineinandersteckbar ausgeführt und mit axialen Anschlägen versehen sein können. Unter gewissen Bedingungen, z.B. nicht zu hohen Temperaturen, ist auch eine Klebeverbindung denkbar.

Die letztlich entstehende, torusförmige Stoßfuge 26 ist nunmehr nach allen Seiten dicht verschlossen und kann evakuiert werden. Zu diesem Zweck ist in der Außenwand 4 des Vakuum-Wärmeisolationselementes 2 ein Evakuierungsstutzen 14 mit einer verschließbaren Öffnung 15 vorhanden. Über dieser Öffnung 15 wird von außen eine Schleuse installiert, welche an eine Vakuumpumpe angeschlossen ist. Nach Evakuieren der Stoßfuge 26 auf einen Druck < 10⁻³ mbar wird eine bereits im Inneren der Schleuse befindliche Verschlußschraube 16 mit Dichtring 17 in die Öffnung 15 eingeschraubt, wodurch letztere dicht verschlossen wird. Dieser Zustand ist in der unteren Hälfte der Figur wiedergegeben. Die - nicht dargestellte - Schleuse kann nun wieder entfernt werden. Der Kopf der Verschlußschraube 16 wird mit der Außenseite des Evakuierungsstutzens 14 vakuumdicht verschweißt, wodurch eine zuverlässige und dauerhafte Abdichtung gewährleistet ist. Am stoßfugenseitigen Ende der Verschlußschraube 16 ist ein Gettermaterial (nicht dargestellt) angeordnet, welches beim Verschweißen auf mindestens 350° C erwärmt und dadurch aktiviert (gestartet) wird. Dieses senkt nun den Druck in der Stoßfuge auf den gewünschten Wert von 10⁻⁵ ./. 10⁻⁶ mbar, wodurch eine ausgezeichnete Isolationswirkung der Stoßfuge 26 erzielt wird, da praktisch nur noch die Wärmeleitungsverluste durch die Membranen 11 und 12 zum Tragen kommen. Der Bereich um die miteinander verschweißten Kanten 7 und 8 kann - falls erforderlich - mit einem Korrosionsschutz versehen werden; anschließend ist die Verbindungsstelle betriebsbereit. Das Gettermaterial kann auch an anderer Stelle in der Stoßfuge angeordnet sein und beispielsweise mit elektrischem Strom aktiviert werden. Unter Umständen kann auf das Gettermaterial auch verzichtet und nur mittels Pumpe evakuiert werden.

Die voranstehenden Aussagen zum Fügeverfahren gelten uneingeschränkt auch für die Herstellung von Behältern. Unterschiedlich ist dabei nur, daß die bei Behältern in der Regel größeren Innenquerschnitte auch ein Arbeiten von innen (Außenisolierung) erlauben, und daß sowohl rohr- oder ringförmige, axial beidseitig offene Wärmeisolationselemente als auch haubenförmige, axial nur einseitig offene Elemente zur Anwendung kommen.

## Patentansprüche

1. Fügeverfahren für rohr-, ring- und haubenförmige Vakuum-Wärmeisolationselemente, deren Außen- und Innenwände axial ausgerichtete, in jeweils einer Ebene umlaufende Kanten aufweisen, wobei die außenliegenden Kanten gegenüber den innenliegenden Kanten jeweils axial versetzt sind, zur Herstellung von wärmeisolierten Rohrleitungen und Behältern mit evakuierten Stoßfugen, **gekennzeichnet** durch folgende Verfahrensschritte:
a) Mit jedem der zu fügenden Vakuum-Wärmeisolationselemente (1, 2) wird im Bereich seiner axial zurückversetzten Kante(n) (9, 10) ein unlaufender, axial nachgiebiger Balg (18, 19; 20, 21) vakuumdicht verbunden, dessen freie, in einer Ebene umlaufende Kante (22, 23) axial über das Vakuum-Wärmeisolationselement (1, 2) hinausragt.
b) Die zu fügenden Vakuum-Wärmeisolationselemente (1, 2) werden so positioniert, daß die Kanten (22, 23) der Bälge (18, 19; 20, 21) bündig und fluchtend aneinanderliegen oder sich axial überlappen.
c) Die Bälge (18, 19; 20, 21) werden vakuumdicht miteinander verbunden.
d) Die Vakuum-Wärmeisolationselemente (1, 2) werden aufeinander zu bewegt, bis ihre Kanten (7, 8) bündig und fluchtend aneinanderliegen oder sich axial überlappen.
e) Die Vakuum-Wärmeisolationselemente (1, 2) werden vakuumdicht miteinander verbunden.
f) Die zwischen den Vakuum-Wärmeisolationselementen (1, 2) und den Bälgen (18, 19; 20, 21) entstandene, torusförmige Stoßfuge (26) wird durch mindestens eine Öffnung (15) in einem der Vakuum-Wärmeisolationselemente auf einen vorgegebenen Druckwert evakuiert, danach wird die Öffnung (15) vakuumdicht verschlossen.

2. Fügeverfahren nach Anspruch 1 , **dadurch gekennzeichnet**, daß beim oder nach dem vakuumdichten Verschließen der Öffnung (15) ein in der Stoßfuge (26) angeordnetes Gettermaterial aktiviert wird, um den Druck in der Stoßfuge (26) noch weiter abzusenken.

3. Fügeverfahren nach Anspruch 2, **dadurch gekennzeichnet**, daß das vakuumdichte Verschließen der Öffnung (15) und das Aktivieren des Gettermaterials durch Einschweißen einer in die Öffnung (15) eingebrachten Verschlußschraube (16) erfolgt, an deren stoßfugenseitigem Ende das Gettermaterial angeordnet ist.

4. Fügeverfahren nach einem der Ansprüche 1 bis 3, **dadurch gekennzeichnet**, daß das vakuumdichte Verbinden der Bälge (18, 19; 20, 21) miteinander und der Kanten (7, 8) der Vakuum-Wärmeisolationselemente (1, 2) miteinander durch Schweißen erfolgt.

5. Fügeverfahren nach Anspruch 4, **dadurch gekennzeichnet**, daß der Bereich der die Vakuum-Wärmeisolationselemente verbindenden Schweißnaht (Kanten 7, 8) nachträglich mit einem Korrosionsschutz versehen wird.

## Claims

1. Joining process for pipe-, ring- or hoodshaped vacuum heat-insulation elements, the outside and inside walls of which have edges which are axially oriented and which extend in a respective plane, wherein the respective outside edges are axially transposed to the inside edges, for producing heat-insulating pipelines and containers with evacuated expansion joints, characterised by the following procedural stages:
a) Each vacuum heat-insulating element (1, 2) to be joined is vacuum-tightly connected in the area of its axially retracted edge(s) (9, 10̸) to a peripheral and axially resilient bellows (18, 19; 20̸, 21), its free edge (22, 23), which extends peripherally in one plane, axially protruding over the vacuum heat-insulation element (1, 2).
b) The vacuum heat-insulating elements (1, 2) to be joined are positioned so that the edges (22, 23) of the bellows (18, 19; 20̸, 21) abut flush or overlap axially.
c) The bellows (18, 19; 20̸, 21) are vacuum-tightly interconnected.
d) The vacuum heat-insulating elements (1, 2) are moved towards each other until their edge (7, 8) abut flush or overlap each other.
e) The vacuum heat-insulating elements (1, 2) are vacuum-tightly interconnected.
f) The toroidal expansion joint (26), which has been established between the vacuum heat-insulating elements (1, 2) and the bellows (18, 19; 20̸, 21), is evacuated to a specified pressure by at last one aperture (15) in one of the vacuum heat-insulating elements, whereafter the aperture (15) is vacuum-tightly sealed.

2. Joining process according to claim 1, **characterised in that**, during or after vacuum-tight sealing of aperture (15), a getter material, which has been arranged in the expansion joint (26), is activated in order to further reduce the pressure in the expansion joint (26).

3. Joining process according to claim 2, **characterised in that** vacuum-tight sealing of the aperture (15) and activation of the getter material is carried out by welding a sealing bolt (16), which has been entered into the aperture (15) and at the expansion-joint end of which the getter material is arranged.

4. Joining process according to one of claims 1 to 3, **characterised in that** the vacuum-tight interconnection of the bellows (18, 19; 20̸, 21) and of the edges (7, 8) of the vacuum heat-insulating elements (1, 2) is carried out by welding.

5. Joining process according to claim 4, **characterised in that** the area of the welding seam (edges 7, 8) which joins the vacuum heat-insulating elements is subsequently treated with an anti-corrosive material.

## Revendications

1. Procédé de jonction d'éléments d'isolation thermique à mise sous vide, en forme de tube d'anneau ou de calotte, dont les parois extérieures et intérieures présentent chacune un bord circulaire qui s'étend dans la direction axiale et est situé dans un plan, les bords extérieurs étant décalés axialement par rapport aux bords intérieurs, pour réaliser des tuyauteries et des récipients isolés thermiquement avec des joints mis sous vide, procédé caractérisé par les étapes suivantes:
a) Sur chaque élément d'isolation thermique à mise sous vide (1, 2), dans la région de son (ses) bord(s) (9, 10) axialement en retrait, on fixe de manière étanche au vide un soufflet (18, 19; 20, 21) circulaire, souple dans la direction axiale, dont le bord (22, 23) libre circulaire est situé dans un plan et fait saillie au-delà de l'élément d'isolation à mise sous vide (1, 2).
b) On positionne les éléments d'isolation thermique à mise sous vide (1, 2) de manière telle que les bords (22, 23) des soufflets (18, 19; 20, 21) soient alignés et appliqués l'un contre l'autre ou se recouvrent dans la direction axiale.
c) On relie entre eux, de manière étanche au vide, les soufflets (18, 19; 20, 21).
d) On déplace les éléments d'isolation thermique à mise sous vide (1, 2) en direction l'un de l'autre jusqu'à ce que leurs bords (7, 8) soient alignés et appliqués l'un contre l'autre ou se recouvrent dans la direction axiale.
e) On relie entre eux, de manière étanche à la pression, les éléments d'isolation thermique à mise sous vide (1, 2).
f) Par au moins une ouverture (15) aménagée dans un des éléments d'isolation thermique à mise sous vide, on réalise le vide jusqu'à une valeur déterminée dans l'espace (26) en forme de tore formé entre les éléments d'isolation thermique à mise sous vide (1, 2) et les soufflets (18, 19; 20, 21), à la suite de quoi on obture l'ouverture (15) de manière étanche au vide.

2. Procédé de jonction selon la revendication 1, caractérisé par le fait que lors de l'obturation ou après avoir obturé de manière étanche au vide l'ouverture (15), on active un matériau pièce placé dans l'espace (26) afin d'abaisser encore la pression à l'intérieur dudit espace (26).

3. Procédé de jonction selon la revendication 2, caractérisé par le fait que l'on l'obture de manière étanche au vide l'ouverture (15) et on active le matériau piège en soudant un bouchon (16) à vis qui est placé dans l'ouverture (15) et dont l'extrémité porte le matériau piège.

4. Procédé de jonction selon l'une des revendications 1 à 3, caractérisé par le fait que l'on relie relie entre eux par soudure, de manière étanche au vide, les soufflets (18, 19; 20. 21) et les bords (7, 8) des éléments d'isolation à mise sous vide (1, 2).

5. Procédé de jonction selon la revendication 4, caractérisé par le fait que l'on applique ensuite un revêtement anti-corrosion dans la région de la soudure (bords 7, 8) reliant les éléments d'isolation thermique à mise sous vide.
